# FASCICULE DE BREVET EUROPEEN

(11) **EP 2 322 361 B1**
(45) Date de publication et mention de la délivrance du brevet: **21.08.2013**
(21) Numéro de dépôt: 10189676.9
(22) Date de dépôt: 02.11.2010
(51) Int. Cl.: B60C 17/04, B60C 15/028

(54) **Dispositif de roulage à plat pour véhicule automobile et ensemble monté l'incorporant**
Notlaufvorrichtung für Kraftfahrzeug und damit montierte Anordnung
Run-flat support for motor vehicle and mounted assembly comprising same

(30) Priorité: 04.11.2009 FR 0905284
(43) Date de publication de la demande: 18.05.2011
(73) Titulaire: HUTCHINSON, 75008 Paris (FR)
(72) Inventeur: Detout, Arnaud, 95290, L'ISLE ADAM (FR); Ratet, Florence, 95620, PARMAIN (FR); Marsaly, Olivier, 95290, L'ISLE ADAM (FR)
(74) Mandataire: Bolinches, Michel Jean-Marie

(56) Documents cités:
- EP-A1- 1 588 870
- WO-A1-03/106199
- DE-C- 820 544
- JP-A- 59 156 808

## Description

La présente invention concerne un dispositif de roulage à plat destiné à équiper un ensemble monté sans chambre à air pour véhicule automobile et un tel ensemble monté incorporant ce dispositif, permettant de parcourir une distance importante à vitesse relativement élevée lorsque l'ensemble monté est partiellement ou totalement dégonflé. Ce dispositif de roulage à plat est notamment utilisable pour équiper un véhicule militaire destiné à évoluer sur tous types de sols incluant des sols sablonneux.

Les dispositifs de roulage à plat connus sont généralement constitués par un anneau de soutien monté avec jeu autour d'une jante de roue à l'intérieur d'une enveloppe de pneumatique. Cet anneau exerce du fait de sa largeur à sa base un effort de plaquage de l'enveloppe sur la jante. On utilise parfois des dispositifs rigides en plusieurs secteurs qui sont fixés deux à deux. Ainsi, le document EP-A-1 541 384 au nom de la Demanderesse présente un dispositif de roulage à plat pour ensemble monté à jante à plusieurs parties de type boulonnée comprenant, d'une part, un anneau de soutien de type creux destiné à être monté autour de la jante et divisé en au moins deux secteurs d'anneau montés indépendamment les uns des autres et, d'autre part, des moyens de blocage des talons de l'enveloppe contre les rebords de jante qui sont destinés à relier les secteurs d'anneau à ces talons, en vue d'assurer la motricité de l'ensemble monté en cas de pression réduite ou nulle dans ce dernier.

Le document EP-A-233 547 divulgue également un dispositif de roulage à plat pour jante multiblocs (i.e. non boulonnée) qui est monté sur la jante par l'intermédiaire d'une semelle élastique souple, dont les bords latéraux nervurés sont destinés à appuyer contre les talons de l'enveloppe de pneumatique. Dans ce dispositif, les secteurs d'anneau sont articulés deux à deux entre eux en s'emboîtant mutuellement dans la direction circonférentielle, via un pivot axial formant charnière qui traverse de part en part les deux secteurs qu'il relie et sur lequel peuvent pivoter ces secteurs.

Un inconvénient majeur de ce dernier dispositif de roulage à plat à secteurs articulés par des charnières réside notamment dans le caractère rigide de ces articulations du fait de l'emboîtement et de la charnière précités.

Le document EP-A-1 588 870 présente une structure annulaire de soutien à secteurs d'anneau articulés spécifiquement pour une jante de roue monobloc à gorge circonférentielle, la structure pouvant être utilisée sans moyens de blocage des talons contre les rebords de jante. Chaque articulation entre secteurs est constituée d'au moins deux biellettes articulées l'une sur l'autre formant ainsi une articulation complexe déformable avec les deux orifices de l'articulation dans lesquels sont montés les deux axes transversaux qui appartiennent respectivement aux deux biellettes et pas à une seule et même patte rigide, ce qui présente notamment l'inconvénient de complexifier les articulations.

Un but de la présente invention est de proposer un dispositif de roulage à plat destiné à équiper un ensemble monté sans chambre à air pour véhicule automobile qui comporte une jante de roue à plusieurs parties et une enveloppe de pneumatique comportant des talons montés contre des rebords de ladite jante, ledit dispositif comprenant :
- une structure annulaire de soutien destinée à être montée autour de la jante en vue de soutenir l'enveloppe, suite à une chute de pression de gonflage dans l'ensemble monté, et qui est divisée en au moins deux secteurs d'anneau en arc de cercle adaptés pour former la structure par juxtaposition dans la direction circonférentielle, ces secteurs étant deux à deux articulés entre eux dans cette direction par des moyens de connexion, et
- des moyens de blocage des talons contre ces rebords qui sont destinés à relier ladite structure annulaire de soutien à ces talons,
qui permette notamment de remédier à cet inconvénient en procurant une flexibilité accrue au dispositif.

A cet effet, un dispositif selon l'invention est tel que lesdits moyens de connexion sont localisés entre les deux faces latérales de chacun des deux secteurs qu'ils articulent entre eux, et comportent deux axes s'étendant dans la direction axiale du dispositif qui sont respectivement fixés dans deux extrémités de connexion en regard de ces secteurs et qui sont reliés entre eux par une articulation s'étendant dans la direction circonférentielle du dispositif, ladite articulation étant constituée par au moins une patte rigide à deux orifices traversants ou bien par au moins un lien flexible à deux boucles, ladite au moins une patte ou ledit au moins un lien étant articulé sur ces axes par ces deux orifices ou boucles, respectivement.

Par « axes », on entend ici de manière connue des pivots sur lesquels, selon la présente invention, vient s'articuler ladite articulation à la manière d'un joint mobile, ce qui confère la flexibilité recherchée au dispositif selon l'invention.

Pour chaque articulation, on notera que la ou chaque patte ou bien que le ou chaque lien flexible, selon le cas, est articulé(e) à lui(elle) seul(e) sur ces deux axes, contrairement à chaque articulation complexe du document EP-A-1 588 870 précité.

Selon une autre caractéristique de l'invention, lesdits moyens de blocage peuvent avantageusement comporter une paire de cales annulaires monoblocs qui sont appliquées axialement de part et d'autre de ladite structure de soutien et en regard d'une zone radialement intérieure de cette structure où sont montés lesdits axes, de sorte à positionner et à immobiliser ces derniers à l'intérieur des secteurs correspondants par le blocage latéral de ces axes à la hauteur radiale déterminée par ces cales.

Chacune de ces deux cales peut présenter une section axiale sensiblement en forme de trapèze dont les petite et grande bases définissent respectivement des faces radialement intérieure et extérieure desdits moyens de blocage, chaque cale étant de préférence à base de caoutchouc renforcé par un élément de renforcement circonférentiel,

Selon une autre caractéristique de l'invention, lesdits axes peuvent être formés de deux axes par exemple à épaulement qui sont respectivement montés dans lesdits deux orifices traversants ou boucles de ladite articulation et qui sont fixés à l'intérieur des deux secteurs articulés correspondants.

Selon un exemple de réalisation de l'invention, l'une des extrémités de chaque secteur, ou extrémité mâle, peut avantageusement se terminer par un organe mâle d'emboîtement qui fait saillie dans la direction circonférentielle radialement au-dessus de ladite articulation et qui est apte à s'emboîter partiellement dans une extrémité femelle du secteur adjacent.

En variante, les secteurs articulés peuvent être aptes à se déplacer réversiblement l'un par rapport à l'autre dans la direction axiale et en torsion autour de la direction circonférentielle via lesdits moyens de blocage, sous l'effet d'efforts latéraux de cisaillement ou de compression appliqués à l'enveloppe en roulage à plat ou à l'état gonflé. Ce dispositif selon l'invention peut ainsi absorber les chocs en roulage à plat et à l'état gonflé à basse pression par des ajustements réversibles tant axiaux qu'en torsion, via la déformabilité de ces moyens de connexion.

L'articulation selon cette variante est alors par exemple de type rigide et est constituée de ladite au moins une patte ou goupille (par exemple métallique ou plastique) articulée sur ces axes qui est apte à coulisser axialement et à pivoter sur ces derniers de sorte à permettre ce déplacement réversible des secteurs ainsi articulés. En variante, cette articulation peut être de type déformable et être constituée dudit au moins un lien flexible articulé via lesdites deux boucles sur ces axes, tel qu'au moins un câblé textile et/ou un câble métallique, ce lien étant apte à se déplacer sur ces axes de sorte à permettre ce déplacement réversible des secteurs.

Selon une autre caractéristique de l'invention, les deux extrémités de chaque secteur peuvent être évidées sur une partie sensiblement médiane de leur largeur axiale de sorte à former, en chaque extrémité de secteur, un évidement qui s'étend sur au moins une partie de la longueur du secteur dans la direction circonférentielle et qui est délimité axialement par deux faces axiales d'évidement traversées toutes deux par ledit axe fixé à cette extrémité de secteur.

Avantageusement, chaque axe peut traverser axialement de part en part le secteur l'incorporant, via un logement axial traversant qui est formé entre chaque face axiale d'évidement et la face latérale en regard de ce secteur et qui reçoit cet axe.

Selon une autre caractéristique de l'invention, lesdits deux évidements que présentent respectivement les deux extrémités de connexion de chaque secteur peuvent s'étendre radialement à partir de la face radialement interne de ce secteur, chaque évidement présentant une section axiale sensiblement rectangulaire.

Selon un premier mode de réalisation de l'invention, lesdits deux évidements de chaque secteur s'étendent jusqu'à la face radialement externe de ce secteur, étant ainsi traversants dans la direction radiale de ce dernier.

Selon un second mode de réalisation de l'invention, lesdits deux évidements de chaque secteur se terminent radialement à distance de la face radialement externe de ce secteur, étant ainsi borgnes dans la direction radiale de ce dernier, chaque secteur étant optionnellement surmonté d'un revêtement de protection à base de caoutchouc. Ce revêtement de protection peut avantageusement être constitué d'un caoutchouc rigide, ou bien d'un composite caoutchouc souple / éléments de renforcement.

On notera que cette portion de protection en caoutchouc permet non seulement de protéger la face radialement externe de la structure annulaire de soutien, mais en outre de protéger l'enveloppe de pneumatique en roulage à l'état gonflé lors d'un choc par exemple, en cas de contact du dispositif avec les flancs ou le sommet de l'enveloppe.

Selon une autre caractéristique de l'invention commune à ces deux modes de réalisation, chacun desdits secteurs peut indifféremment présenter une structure pleine, creuse ou ajourée (par exemple ajourée au niveau de sa face radialement interne et/ou de ses faces latérales), et il est de préférence réalisé en un matériau plastique ou composite. A titre encore plus préférentiel, on utilise un matériau composite pouvant comprendre une matrice polymérique (par exemple en polyamide ou en résine époxyde) renforcée par une armature de fibres de verre ou de carbone.

Un ensemble monté sans chambre à air selon l'invention pour véhicule automobile, comprend une jante de roue à plusieurs parties, une enveloppe de pneumatique comportant des talons respectivement montés contre des rebords axialement interne et externe de la jante, et un dispositif de roulage à plat monté autour de la jante entre lesdits rebords, et cet ensemble monté est **caractérisé en ce que** le dispositif est tel que défini ci-dessus.

Avantageusement, ladite jante est de type à deux parties boulonnées et peut présenter un fond de jante sensiblement plat (i.e. sans creux de jante).

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels:
la figure 1 est une vue en demi-coupe axiale d'un ensemble monté incorporant un dispositif de roulage à plat selon un premier mode de réalisation de l'invention incorporant des moyens de connexion rigides entre secteurs,
la figure 2 est une vue en demi-coupe circonférentielle selon le plan II-II de la figure 1 de cet ensemble monté,
la figure 3 est une vue en perspective d'un secteur en arc de cercle de la structure annulaire de soutien du dispositif selon la figure 1,
la figure 4 est une vue en perspective de la structure annulaire de soutien du dispositif selon la figure 1 comportant deux secteurs selon la figure 3 ayant été connectés entre eux,
la figure 5 est une vue en perspective d'un secteur en arc de cercle d'une structure annulaire de soutien d'un dispositif de roulage à plat selon un second mode de réalisation de l'invention,
la figure 6 est une vue en perspective éclatée de la structure de soutien d'un dispositif à trois secteurs selon la figure 5 à connecter entre eux via des moyens de connexion rigides selon l'invention, qui sont également utilisables dans le premier mode de réalisation des figures 1 à 4,
la figure 7 est une vue partielle en perspective éclatée d'une structure de soutien selon le second mode de l'invention dont les secteurs sont à connecter entre eux via des moyens de connexion rigides analogues à ceux de la figure 6 et en outre par emboîtement de leurs extrémités en regard,
la figure 8 est une vue partielle en perspective éclatée d'une structure de soutien selon le premier mode de l'invention dont les secteurs sont à connecter entre eux via les moyens de connexion rigides de la figure 7 et par emboîtement de leurs extrémités en regard,
la figure 9 est une vue partielle en perspective éclatée d'une structure de soutien selon ce premier mode correspondant à une variante de la figure 8, dont les secteurs sont à connecter entre eux via ces moyens de connexion rigides et par emboîtement de leurs extrémités en regard, et
la figure 10 est une vue partielle en perspective éclatée d'une structure de soutien selon le second mode de l'invention dont les secteurs sont à connecter entre eux via des moyens de connexion déformables et en outre par emboîtement de leurs extrémités en regard.

Dans la présente description, les expressions « axialement interne » et « axialement externe » se réfèrent respectivement aux côtés de la jante de roue qui sont destinés à être tournés vers l'intérieur et vers l'extérieur du véhicule automobile, suite au montage sur un véhicule d'un ensemble monté comportant cette jante.

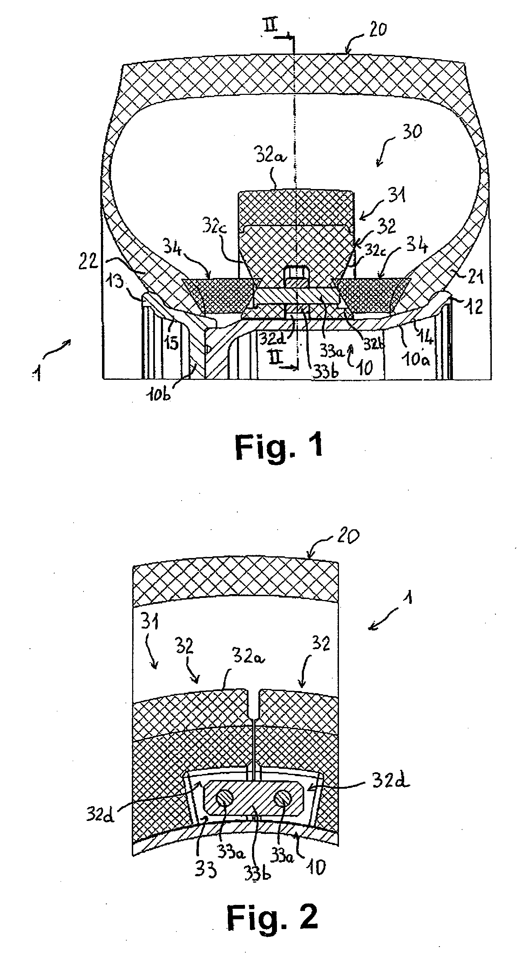

L'ensemble monté 1 selon l'invention qui est illustré à la figure 1 comprend une jante de roue 10 à deux parties 10a et 10b solidarisées l'une avec l'autre par des moyens de fixation (non illustrés) de type boulons.

Les deux parties 10a et 10b comportent respectivement des rebords axialement interne et externe 12 et 13 délimitant respectivement deux sièges de jante 14 et 15 s'étendant axialement à partir des rebords 12 et 13, une enveloppe de pneumatique 20 dont les talons 21 et 22 sont montés en appui sur les sièges 14 et 15 contre les rebords 12 et 13, et un dispositif de roulage à plat 30 monté autour de la jante 10 à l'intérieur de l'enveloppe 20 et destiné à soutenir celle-ci suite à une chute de pression de gonflage à l'intérieur de l'ensemble monté 1.

Dans l'exemple de la figure 1, le dispositif 30 est monté sur un fond de jante 10 de type sensiblement plat. Ce dispositif 30 comporte :
- une structure annulaire de soutien 31 qui est destinée à être montée sur la jante 10 en vue de soutenir l'enveloppe 20, suite à une chute de pression de gonflage à l'intérieur de l'ensemble monté 1, et qui est divisée en secteurs d'anneau 32 chacun en arc de cercle et de structure pleine qui sont articulés entre eux via des moyens de connexion 33 et qui sont adaptés pour former la structure 31 par juxtaposition dans la direction circonférentielle de cette dernière, et
- des cales annulaires 34 de blocage des talons 21 et 22 contre les rebords 12 et 13 qui sont destinés à relier la structure 31 aux talons 21 et 22 et qui sont chacune d'un seul tenant, étant à base de caoutchouc renforcé par un élément de renforcement circonférentiel (non illustré), ces cales 34 étant appliquées latéralement sur une zone radialement intérieure des secteurs 32 située en regard des moyens de connexion 33, de sorte à les maintenir en position en roulage.

Chaque secteur d'anneau 32 est de préférence réalisé en un matériau composite, tel qu'une matrice de polyamide renforcée par une armature de fibres de verre, et il est selon ce premier mode de réalisation surmonté radialement d'un revêtement de protection 32a à base d'un caoutchouc de préférence de type rigide. On notera toutefois que ce revêtement 32a pourrait en variante être constitué d'un composite caoutchouc souple / éléments de renforcement.

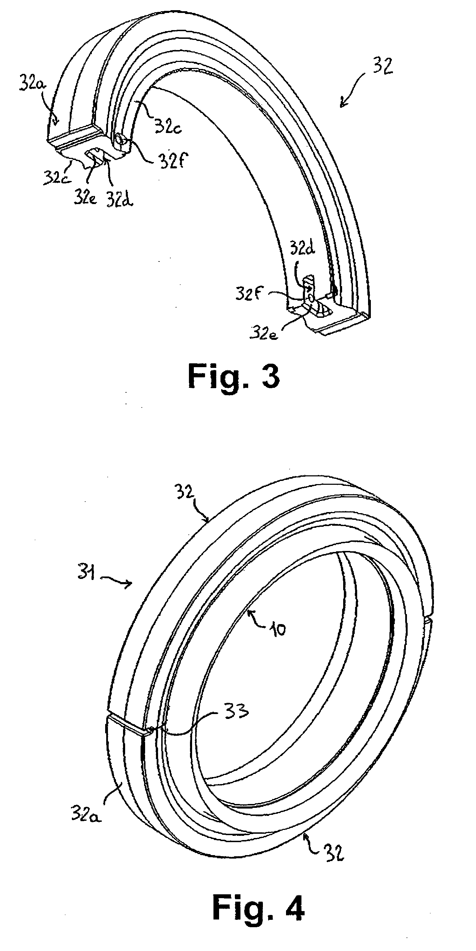

Quant à la géométrie de chaque secteur d'anneau 32, elle présente à l'exemple de la figure 1 (voir également les figures 3 et 4) :
- dans ladite zone radialement intérieure sur laquelle appuient les cales de blocage 34, une section axiale sensiblement trapézoïdale qui s'élargit axialement au niveau de la face radialement interne du secteur 32 pour former une embase 32b de ce dernier et,
- dans une zone radialement extérieure surmontant la précédente, une section axiale sensiblement en forme de trapèze isocèle dont la grande base coïncide avec le revêtement de protection 32a.

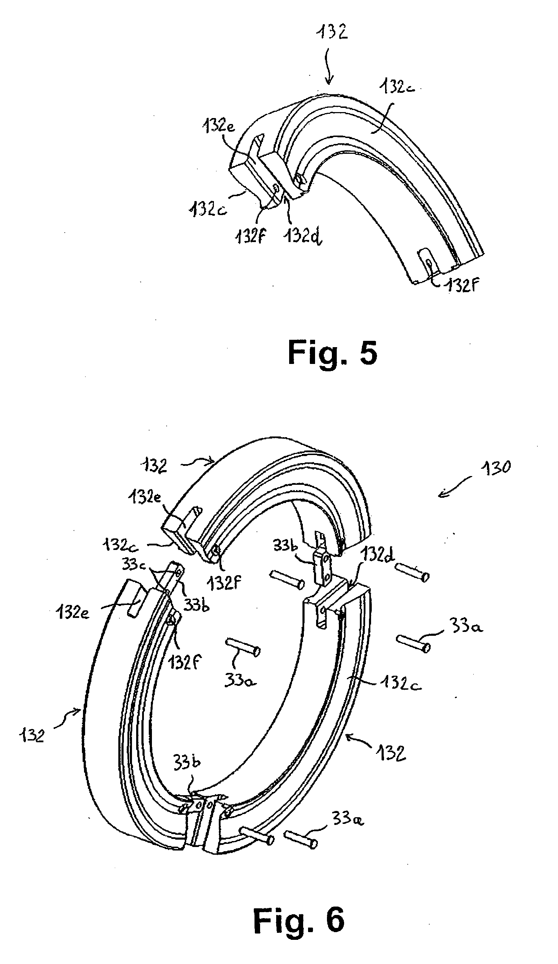

Comme illustré aux figures 1, 2 et 6, les moyens de connexion 33 pour articuler les secteurs 32 deux à deux entre eux sont localisés entre les deux faces latérales 32c de chacun des deux secteurs 32 qu'ils articulent entre eux, et comportent deux axes 33a de type axes à épaulement s'étendant dans la direction axiale du dispositif 30, qui sont respectivement fixés dans deux extrémités de connexion en regard de ces secteurs 32 via des évidements circonférentiels 32d ménagés dans ces extrémités (voir figures 2 et 6) et qui sont reliés entre eux par une patte articulée ou goupille 33b s'étendant dans la direction circonférentielle du dispositif 30.

Plus précisément, on voit à la figure 3 que l'évidement 32d formé à chaque extrémité d'un secteur 32 s'étend sur une partie de la longueur de ce secteur 32 dans sa direction circonférentielle et sur une partie médiane de sa largeur axiale à la manière d'une saignée, et que chaque évidement 32d est délimité axialement par deux faces axiales d'évidement 32e traversées toutes deux par l'axe 33a fixé à cette extrémité de secteur 32. Comme visible aux figures 2 et 6, les deux axes 33a sont respectivement montés dans deux orifices traversants 33c de la patte 33b et traversent chacun axialement de part en part l'extrémité de secteur 32 correspondante, via deux logements axiaux traversants 32f, 132f recevant chaque axe 33a à travers cette extrémité de secteur 32, 132. On voit aux figures 1 et 6 que chacun des deux logements d'axes 32f, 132f débouche à la fois sur une face axiale d'évidement 32e, 132e et sur la face latérale 32c, 132c en regard du secteur 32.

Comme illustré à l'ensemble des figures 1 à 6, l'évidement 32d que présente chacune des deux extrémités de connexion d'un secteur 32 s'étend radialement à partir de la face radialement interne de ce secteur 32 selon une section axiale sensiblement rectangulaire.

Comme illustré aux figures 1 à 4 pour le premier mode de réalisation de l'invention selon lequel chaque secteur 32 est surmonté du revêtement de protection 32a, les deux évidements 32d de chaque secteur 32 se terminent radialement à distance de ce revêtement 32a, étant ainsi borgnes dans la direction radiale du secteur 32.

Mais comme illustré aux figures 5 et 6 pour le second mode de réalisation de l'invention selon lequel chaque secteur 132 du dispositif 130 se différencie uniquement de chaque secteur 32 selon le premier mode, en ce qu'il n'est pas surmonté d'un tel revêtement de protection 32a, les deux évidements ou saignées 132d de chaque secteur 132 s'étendent jusqu'à la face radialement externe de ce secteur 132, étant ainsi traversants dans la direction radiale de ce dernier. On notera que, selon ce second mode, les moyens de connexion 33 sont inchangés en référence à ceux du premier mode des figures 1 à 4.

Pour réaliser le montage du dispositif de roulage à plat 30, 130 selon l'un ou l'autre de ces deux modes de réalisation, on procède avantageusement de la manière suivante :
- on commence par insérer les secteurs 32, 132 bout à bout et non connectés entre eux à l'intérieur de l'enveloppe de pneumatique 20 ;
- on met mutuellement en regard ces secteurs 32, 132 à l'intérieur de l'enveloppe 20, tant axialement et radialement que circonférentiellement,
- on connecte les secteurs 32, 132 entre eux à l'intérieur de l'enveloppe 20, via l'assemblage des moyens de connexion 33 (insertion de chaque patte 33b dans les évidements 32d, 132d entre deux secteurs 32, 132 et des axes 33a dans les logements 32f, 132f correspondants, axialement de part et d'autre de ces évidements 32d, 132d),
- on vient positionner les deux cales de blocage 34 axialement contre ces secteurs ainsi connectés et radialement en regard des axes 33a afin de les maintenir en position en roulage,
- on fait glisser le dispositif de roulage à plat 30, 130 ainsi assemblé sur la partie axialement interne 10a de la jante boulonnée 10, puis
- on vient boulonner la partie axialement externe 10b de cette jante 10 sur la partie 10a.

Comme indiqué précédemment, on notera que les secteurs 32, 132 ainsi articulés peuvent se déplacer réversiblement l'un par rapport à l'autre à la fois axialement et en torsion mutuelle, via le coulissement axial et le pivotement combinés de la patte ou goupille 33b sur les deux axes 33a et via la souplesse des cales de blocage 34, sous l'effet d'efforts latéraux de cisaillement ou de compression appliqués à l'enveloppe en roulage à plat ou à l'état gonflé.

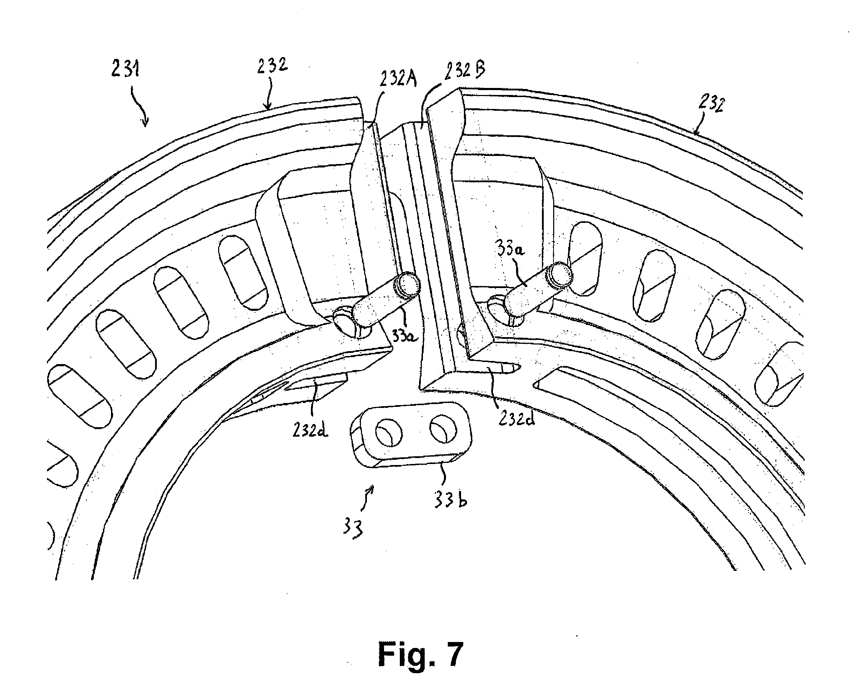

Les secteurs 232 illustrés à la figure 7 sont conformes au second mode de réalisation de l'invention, en ce sens que leurs évidements terminaux en regard 232d s'étendent de manière traversante dans la direction radiale de ces secteurs 232. Les moyens de connexion 33 utilisés pour ces secteurs 232 sont constitués d'une patte 33b articulée sur deux axes 33a à l'instar de ce qui vient d'être décrit en référence aux figures 1 à 6, mais également en outre d'un organe mâle 232A en forme de dent par lequel se termine l'une des extrémités mâle de chaque secteur 232 et qui fait saillie dans la direction circonférentielle radialement au-dessus de la patte 33a en étant apte à s'emboîter partiellement dans une extrémité femelle 232B du secteur 232 adjacent. On notera que cet organe mâle 232A partiellement emboîté est ainsi apparent à partir de la face radialement externe de la structure de soutien correspondante 231.

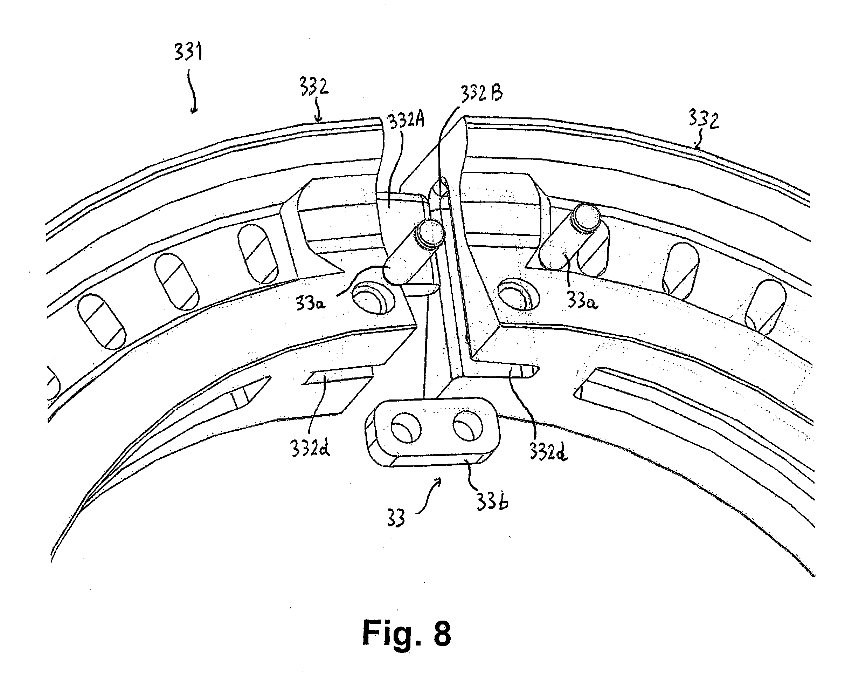

Les secteurs 332 illustrés à la figure 8 sont conformes au premier mode de réalisation de l'invention, en ce sens que leurs évidements terminaux en regard 332d se terminent à distance de la face radialement externe de ces secteurs 332, du fait de la forme sensiblement en « π » de chaque face d'extrémité de secteur 332 délimitant cet évidement 332d. Les moyens de connexion 33 utilisés pour ces secteurs 332 sont constitués d'une patte 33b articulée sur deux axes 33a comme précédemment, et en outre d'un organe mâle 332A en forme de dent (de hauteur radiale plus réduite que celle de l'organe apparent 232A) par lequel se termine l'une des extrémités mâle de chaque secteur 332 et qui fait saillie dans la direction circonférentielle radialement au-dessus de la patte 33a en étant apte à s'emboîter partiellement dans une extrémité femelle 332B du secteur 332 adjacent. On notera que cet organe mâle 332A partiellement emboîté n'est ainsi pas visible à partir de la face radialement externe de la structure de soutien correspondante 331.

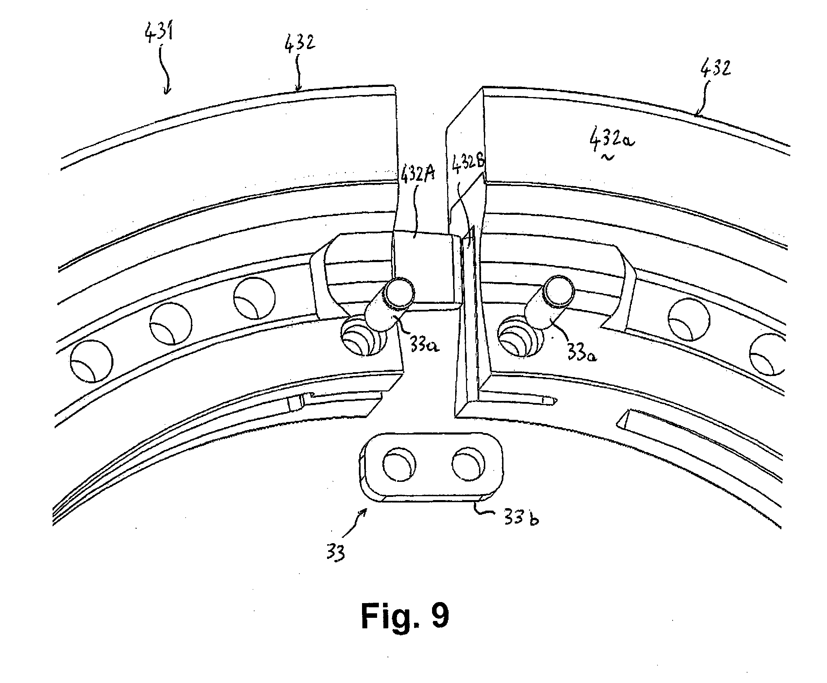

Les secteurs 432 illustrés à la figure 9 sont également conformes au premier mode de réalisation de l'invention et se différencient uniquement de ceux de la figure 8, en ce que la structure de base de chaque secteur 432 pourvu d'un organe mâle 432A emboîté dans l'extrémité femelle adjacente 432B est recouverte d'un revêtement à base de caoutchouc 432a définissant la face radialement externe de la structure de soutien correspondante 431.

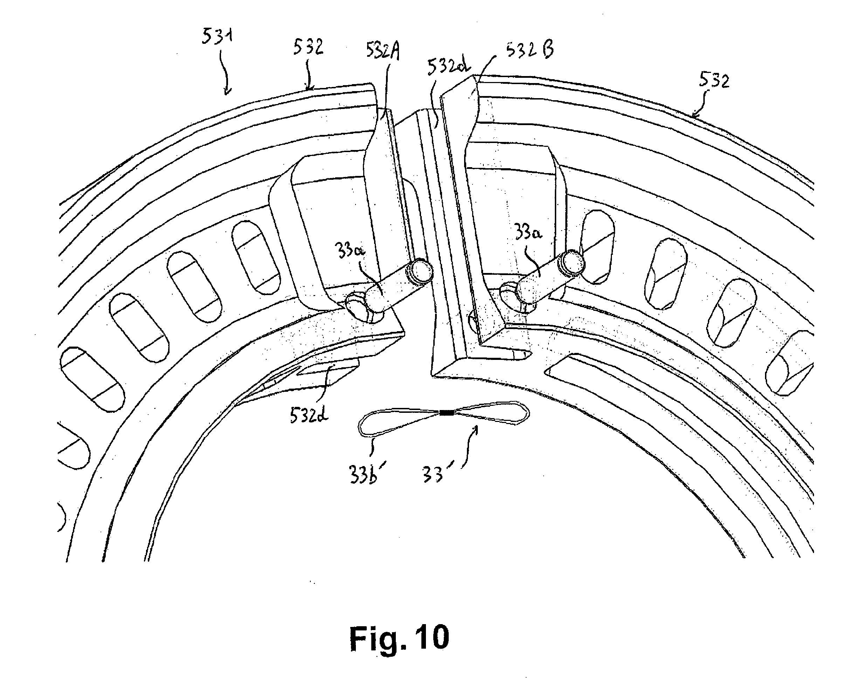

Les secteurs 532 illustrés à la figure 10 sont conformes au second mode de réalisation de l'invention pour la structure de soutien 531, en ce sens que leurs évidements terminaux en regard 532d sont traversants dans la direction radiale des secteurs 532. Les moyens de connexion 33' utilisés pour ces secteurs 532 sont constitués d'un lien flexible 33b' par exemple constitué d'un câblé textile ou métallique qui forme deux boucles (par exemple en « 8 ») articulées sur deux axes 33a analogues à ceux précités, mais également en outre d'un organe mâle 532A en forme de dent analogue à celui de la figure 7 qui vient s'emboîter partiellement dans l'extrémité femelle 532B du secteur 532 adjacent.

## Revendications

1. Dispositif de roulage à plat (30, 130) destiné à équiper un ensemble monté (1) sans chambre à air pour véhicule automobile qui comporte une jante de roue (10) en plusieurs parties (10a et 10b) et une enveloppe de pneumatique (20) comportant des talons (21 et 22) montés contre des rebords (12 et 13) de ladite jante, ledit dispositif comprenant :
- une structure annulaire de soutien (31, 231 à 531) qui est destinée à être montée autour de la jante en vue de soutenir l'enveloppe, suite à une chute de pression de gonflage à l'intérieur de l'ensemble monté, et qui est divisée en au moins deux secteurs d'anneau (32 à 532) en arc de cercle adaptés pour former ladite structure par juxtaposition dans la direction circonférentielle, ces secteurs étant deux à deux articulés entre eux dans cette direction par des moyens de connexion (33, 33'), et
- des moyens de blocage (34) des talons contre ces rebords qui sont destinés à relier ladite structure annulaire de soutien à ces talons,
**caractérisé en ce que** lesdits moyens de connexion sont localisés entre les deux faces latérales (32c, 132c) de chacun des deux secteurs qu'ils articulent entre eux, et comportent deux axes (33a) s'étendant dans la direction axiale du dispositif qui sont respectivement fixés dans deux extrémités de connexion en regard de ces secteurs et qui sont reliés entre eux par une articulation (33b, 33b') s'étendant dans la direction circonférentielle du dispositif, ladite articulation étant constituée par au moins une patte rigide (33b) à deux orifices traversants (33c) ou bien par au moins un lien flexible (33b') à deux boucles, ladite ou chaque patte ou ledit ou chaque lien étant articulé(e) à elle seule ou à lui seul sur ces axes par ces deux orifices ou boucles, respectivement.

2. Dispositif de roulage à plat (30, 130) selon la revendication 1, **caractérisé en ce que** lesdits moyens de blocage (34) comportent une paire de cales annulaires monoblocs qui sont appliquées axialement de part et d'autre de ladite structure de soutien (31) et en regard d'une zone radialement intérieure de cette structure où sont montés lesdits axes (33a), de sorte à immobiliser ces derniers à l'intérieur des secteurs (32 à 532) correspondants.

3. Dispositif de roulage à plat (30, 130) selon la revendication 2, **caractérisé en ce que** chacune de ces deux cales (34) présente une section axiale sensiblement en forme de trapèze dont les petite et grande bases définissent respectivement des faces radialement intérieure et extérieure desdits moyens de blocage, chaque cale étant à base de caoutchouc renforcé par un élément de renforcement circonférentiel.

4. Dispositif de roulage à plat (30, 130) selon une des revendications précédentes, **caractérisé en ce que** lesdits axes (33a) sont formés de deux axes par exemple à épaulement qui sont respectivement montés dans lesdits deux orifices traversants (33c) ou boucles de ladite articulation (33b, 33b') et qui sont fixés à l'intérieur des deux secteurs (32 à 532) articulés correspondants.

5. Dispositif de roulage à plat selon une des revendications précédentes, **caractérisé en ce que** l'une des extrémités de chaque secteur (232 à 532), ou extrémité mâle, se termine par un organe mâle d'emboîtement (232A à 532A) qui fait saillie dans la direction circonférentielle radialement au-dessus de ladite articulation (33b, 33b') et qui est apte à s'emboîter partiellement dans une extrémité femelle (232B à 532B) du secteur adjacent.

6. Dispositif de roulage à plat (30, 130) selon la revendication 4, **caractérisé en ce que** les secteurs articulés (32 à 532) sont aptes à se déplacer réversiblement l'un par rapport à l'autre dans la direction axiale et en torsion autour de la direction circonférentielle via lesdits moyens de blocage (34), sous l'effet d'efforts latéraux de cisaillement ou de compression appliqués à l'enveloppe (20) en roulage à plat ou à l'état gonflé.

7. Dispositif de roulage à plat (30, 130) selon la revendication 6, **caractérisé en ce que** chaque articulation (33b), de type rigide et constituée de ladite au moins une patte articulée sur lesdits axes (33a), est apte à coulisser axialement et à pivoter sur ces axes (33a), de sorte à permettre ce déplacement réversible des secteurs (32, 132) ainsi articulés.

8. Dispositif de roulage à plat selon la revendication 6, **caractérisé en ce que** chaque articulation (33b'), de type déformable et constituée dudit au moins un lien flexible articulé via lesdites deux boucles sur lesdits axes (33a), tel qu'au moins un câblé textile et/ou un câble métallique, est apte à se déplacer sur ces axes (33a), de sorte à permettre ce déplacement réversible des secteurs (532) ainsi articulés.

9. Dispositif de roulage à plat (30, 130) selon une des revendications précédentes, **caractérisé en ce que** les deux extrémités de chaque secteur (32 à 532) sont évidées sur une partie sensiblement médiane de leur largeur axiale de sorte à former, en chaque extrémité de secteur, un évidement (32d à 532d) qui s'étend sur au moins une partie de la longueur du secteur dans la direction circonférentielle et qui est délimité axialement par deux faces axiales d'évidement (32e, 132e) traversées toutes deux par ledit axe (33a) fixé à cette extrémité de secteur.

10. Dispositif de roulage à plat (30, 130) selon la revendication 9, **caractérisé en ce que** chaque axe (33a) traverse axialement de part en part le secteur (32 à 532) l'incorporant, via un logement axial traversant (32f, 132f) qui est formé entre chaque face axiale d'évidement (32e, 132e) et la face latérale (32c, 132c) en regard de ce secteur et qui reçoit cet axe.

11. Dispositif de roulage à plat (30, 130) selon la revendication 9 ou 10, **caractérisé en ce que** lesdits deux évidements (32d à 532d) que présentent respectivement les deux extrémités de connexion de chaque secteur (32 à 532) s'étendent radialement à partir de la face radialement interne de ce secteur, chaque évidement présentant une section axiale sensiblement rectangulaire.

12. Dispositif de roulage à plat (130) selon la revendication 11, **caractérisé en ce que** lesdits deux évidements (132d, 232d, 532d) de chaque secteur (132, 232, 532) s'étendent jusqu'à la face radialement externe de ce secteur, étant ainsi traversants dans la direction radiale de ce dernier.

13. Dispositif de roulage à plat (30) selon la revendication 11, **caractérisé en ce que** lesdits deux évidements (32d) de chaque secteur (32, 432) se terminent radialement à distance de la face radialement externe de ce secteur, étant ainsi borgnes dans la direction radiale de ce dernier, chaque secteur étant optionnellement surmonté d'un revêtement de protection (32a, 432a) à base de caoutchouc.

14. Dispositif de roulage à plat (30, 130) selon une des revendications précédentes, **caractérisé en ce que** chacun desdits secteurs (32, 132) est réalisé en un matériau plastique ou composite.

15. Ensemble monté (1) sans chambre à air pour véhicule automobile, comprenant une jante de roue (10) en plusieurs parties (10a et 10b), une enveloppe de pneumatique (20) comportant des talons (21 et 22) respectivement montés contre des rebords axialement interne et externe (12 et 13) de la jante, et un dispositif de roulage à plat (30, 130) monté autour de la jante entre lesdits rebords, **caractérisé en ce que** ce dispositif est tel que défini à l'une des revendications précédentes.

16. Ensemble monté (1) selon la revendication 15, **caractérisé en ce que** ladite jante (10) est de type à deux parties boulonnées et présente un fond de jante sensiblement plat.

## Patentansprüche

1. Notlaufvorrichtung (30, 130), die zur Ausrüstung einer montierten Einheit (1) ohne Luftschlauch für ein Kraftfahrzeug bestimmt ist, die eine Radfelge (10) in mehreren Teilen (10a und 10b) und einen Luftreifenmantel (20) aufweist, der gegen Randleisten (12 und 13) der Felge montierte Wülste (21 und 22) aufweist, wobei die Vorrichtung enthält:
- eine ringförmige Stützstruktur (31, 231 bis 531), die dazu bestimmt ist, um die Felge herum montiert zu werden, um den Mantel nach einem Luftdruckabfall im Inneren der montierten Einheit zu stützen, und die in mindestens zwei bogenförmige Ringsektoren (32 bis 532) aufgeteilt ist, die geeignet sind, um durch Aneinanderreihen in Umfangsrichtung die Struktur zu bilden, wobei diese Sektoren in dieser Richtung paarweise durch Verbindungseinrichtungen (33, 33') aneinander angelenkt sind, und
- Einrichtungen (34) zum Blockieren der Wülste gegen diese Randleisten, die dazu bestimmt sind, die ringförmige Stützstruktur mit diesen Wülsten zu verbinden,
**dadurch gekennzeichnet, dass** die Verbindungseinrichtungen sich zwischen den zwei Seitenflächen (32c, 132c) jedes der zwei Sektoren befinden, die sie aneinander anlenken, und zwei sich in der axialen Richtung der Vorrichtung erstreckende Achsen (33a) aufweisen, die jeweils in zwei gegenüberliegenden Verbindungsenden dieser Sektoren befestigt und miteinander durch ein Gelenk (33b, 33b') verbunden sind, das sich in Umfangsrichtung der Vorrichtung erstreckt, wobei das Gelenk aus mindestens einer steifen Klammer (33b) mit zwei Durchgangsöffnungen (33c) oder auch aus mindestens einem biegsamen Band (33b') mit zwei Schlaufen besteht, wobei die oder jede Klammer oder das oder jedes Band alleine an diese Achsen durch diese zwei Öffnungen bzw. Schlaufen angelenkt ist.

2. Notlaufvorrichtung (30, 130) nach Anspruch 1, **dadurch gekennzeichnet, dass** die Blockiereinrichtungen (34) ein Paar ringförmiger einstückiger Keile aufweisen, die axial zu beiden Seiten der Stützstruktur (31) und gegenüber einer radial inneren Zone dieser Struktur angelegt werden, wo die Achsen (33a) montiert sind, um letztere im Inneren der entsprechenden Sektoren (32 bis 532) zu fixieren.

3. Notlaufvorrichtung (30, 130) nach Anspruch 2, **dadurch gekennzeichnet, dass** jeder dieser zwei Keile (34) einen im Wesentlichen trapezförmigen axialen Querschnitt hat, dessen kleine und große Basis radial innere bzw. äußere Seiten der Blockiereinrichtungen definieren, wobei jeder Keil auf der Basis von Kautschuk verstärkt durch ein Umfangsverstärkungselement ist.

4. Notlaufvorrichtung (30, 130) nach einem der vorhergehenden Ansprüche, **dadurch gekennzeichnet, dass** die Achsen (33a) von zwei Achsen zum Beispiel mit Schulter gebildet werden, die in die zwei Durchgangsöffnungen (33c) bzw. Schlaufen des Gelenks (33b, 33b') montiert und im Inneren der zwei entsprechenden angelenkten Sektoren (32 bis 532) befestigt sind.

5. Notlaufvorrichtung nach einem der vorhergehenden Ansprüche, **dadurch gekennzeichnet, dass** eines der Enden jedes Sektors (232 bis 532), oder Einsteckende, in einem Einsteckglied (232A bis 532A) endet, das in der Umfangsrichtung radial über dem Gelenk (33b, 33b') vorsteht und teilweise in ein Aufnahmeende (2328 bis 5328) des benachbarten Sektors eingesteckt werden kann.

6. Notlaufvorrichtung (30, 130) nach Anspruch 4, **dadurch gekennzeichnet, dass** die angelenkten Sektoren (32 bis 532) sich umkehrbar zueinander in axialer Richtung und in Torsion um die Umfangsrichtung mittels der Blockiereinrichtungen (34) unter der Wirkung von seitlichen Scher- oder Komprimierungskräften verschieben können, die auf den Mantel (20) beim Notlauf oder im aufgepumpten Zustand angewendet werden.

7. Notlaufvorrichtung (30, 130) nach Anspruch 6, **dadurch gekennzeichnet, dass** jedes Gelenk (33b), vom starren Typ und aus der mindestens einen an die Achsen (33a) angelenkten Klammer bestehend, axial gleiten und um diese Achsen {33a} schwenken kann, um diese umkehrbare Verschiebung der so angelenkten Sektoren (32, 132) zu erlauben.

8. Notlaufvorrichtung nach Anspruch 6, **dadurch gekennzeichnet, dass** jedes Gelenk (33b'), vom verformbaren Typ und aus mindestens einem biegsamen Band bestehend, das mittels der zwei Schlaufen an die Achsen (33a) angelenkt ist, wie mindestens ein Textilkord und/oder ein Metallkabel, sich auf diesen Achsen (33a) verschieben kann, um diese umkehrbare Verschiebung der so angelenkten Sektoren (532) zu erlauben.

9. Notlaufvorrichtung (30, 130) nach einem der vorhergehenden Ansprüche, **dadurch gekennzeichnet, dass** die zwei Enden jedes Sektors (32 bis 532) über einen im Wesentlichen mittleren Teil ihrer axialen Breite ausgehöhlt sind, um an jedem Sektorende eine Aussparung (32d bis 532d) zu formen, die sich über mindestens einen Teil der Länge des Sektors in der Umfangsrichtung erstreckt und axial von zwei axialen Aussparungsseiten (32e, 132e) begrenzt wird, die beide von der an diesem Sektorende befestigten Achse (33a) durchquert werden.

10. Notlaufvorrichtung (30, 130) nach Anspruch 9, **dadurch gekennzeichnet, dass** jede Achse (33a) den sie enthaltenden Sektor (32 bis 532) axial von einer Seite zur anderen über eine axiale Durchgangsaufnahme (32f, 132f) durchquert, die zwischen jeder axialen Aussparungsseite (32e, 132e) und der gegenüberliegenden Seitenfläche (32c, 132c) dieses Sektors geformt ist und die diese Achse aufnimmt.

11. Notlaufvorrichtung (30, 130) nach Anspruch 9 oder 10, **dadurch gekennzeichnet, dass** die zwei Aussparungen (32d bis 532d), die die zwei Verbindungsenden jedes Sektors (32 bis 532) aufweisen, sich radial ausgehend von der radial inneren Seite dieses Sektors erstrecken, wobei jede Aussparung einen im Wesentlichen rechteckigen axialen Querschnitt aufweist.

12. Notlaufvorrichtung (130) nach Anspruch 11, **dadurch gekennzeichnet, dass** die zwei Aussparungen (132d, 232d, 532d) jedes Sektors (132, 232, 532) sich bis zur radial äußeren Seite dieses Sektors erstrecken, wodurch sie so in der radialen Richtung dieses letzteren durchgehend sind.

13. Notlaufvorrichtung (30) nach Anspruch 11, **dadurch gekennzeichnet, dass** die zwei Aussparungen (32d) jedes Sektors (32, 432) radial in Abstand zur radial äußeren Seite dieses Sektors enden, wodurch sie in der radialen Richtung dieses letzteren blind sind, wobei jeder Sektor optional von einer Schutzverkleidung (32a, 432a) auf der Basis von Kautschuk überdeckt wird.

14. Notlaufvorrichtung (30, 130) nach einem der vorhergehenden Ansprüche, **dadurch gekennzeichnet, dass** jeder der Sektoren (32, 132) aus einem Kunststoff- oder Verbundmaterial hergestellt wird.

15. Montierte Einheit (1) ohne Luftschlauch für ein Kraftfahrzeug, die eine Radfelge (10) in mehreren Teilen (10a und 10b), einen Luftreifenmantel (20), der Wülste (21 und 22) aufweist, die gegen axial innere bzw. äußere Randleisten (12 und 13) der Felge montiert sind, und eine Notlaufvorrichtung (30, 130) aufweist, die um die Felge zwischen den Randleisten montiert ist, **dadurch gekennzeichnet, dass** diese Vorrichtung wie in einem der vorhergehenden Ansprüche definiert ist.

16. Montierte Einheit (1) nach Anspruch 15, **dadurch gekennzeichnet, dass** die Felge (10) von der Art mit zwei schraubbaren Teilen ist und einen im Wesentlichen flachen Felgenboden aufweist.

## Claims

1. Flat-running device (30, 130) designed to be fitted to a tubeless mounted assembly (1) for a motor vehicle which comprises a wheel rim (10) in several parts (10a and 10b) and a tire casing (20) comprising beads (21 and 22) mounted against edges (12 and 13) of said rim, said device comprising:
- an annular supporting structure (31, 231 to 531) which is designed to be mounted around the rim for the purpose of supporting the casing, following a drop in inflation pressure inside the mounted assembly, and which is divided into at least two ring sectors (32 to 532) in an arc of a circle suitable for forming said structure by juxtaposition in the circumferential direction, these sectors being articulated together in twos in this direction by connection means (33, 33'), and
- means (34) for locking the beads against these edges which are designed to connect said annular supporting structure to these beads,
**characterized in that** said connection means are located between the two lateral faces (32c, 132c) of each of the two sectors that they articulate together, and comprise two spindles (33a) extending in the axial direction of the device which are respectively attached in two facing connection ends of these sectors and which are connected together by an articulation (33b, 33b') extending in the circumferential direction of the device, said articulation consisting of at least one rigid lug (33b) with two through-holes (33c) or else of at least one flexible link (33b') with two loops, said or each lug or said or each link being articulated alone on these spindles by these two holes or loops, respectively.

2. Flat-running device (30, 130) according to Claim 1, **characterized in that** said locking means (34) comprise a pair of one-piece annular wedges which are pressed axially on either side of said supporting structure (31) and facing a radially inner zone of this structure where said spindles (33a) are mounted so as to immobilize the latter inside the corresponding sectors (32 to 532).

3. Flat-running device (30, 130) according to Claim 2, **characterized in that** each of these two wedges (34) has a substantially trapezium-shaped axial section the small and large bases of which define respectively radially inner and outer surfaces of said locking means, each wedge being based on rubber that is reinforced by a circumferential reinforcing element.

4. Flat-running device (30, 130) according to one of the preceding claims, **characterized in that** said spindles (33a) are formed of two spindles for example with shoulder which are respectively mounted in said two through-holes (33c) or loops of said articulation (33b, 33b') and which are attached inside the two corresponding articulated sectors (32 to 532).

5. Flat-running device according to one of the preceding claims, **characterized in that** one of the ends of each sector (232 to 532), or male end, terminates in a fitting male member (232A to 532A) which protrudes in the circumferential direction radially above said articulation (33b, 33b') and which is capable of partially fitting into a female end (232B to 532B) of the adjacent sector.

6. Flat-running device (30, 130) according to Claim 4, **characterized in that** the articulated sectors (32 to 532) are capable of moving reversibly relative to one another in the axial direction and in torsion about the circumferential direction via said locking means (34), under the effect of lateral shearing or compression forces applied to the casing (20) when running flat or in the inflated state.

7. Flat-running device (30, 130) according to Claim 6, **characterized in that** each articulation (33b), of rigid type and consisting of said at least one lug articulated on said spindles (33a), is capable of sliding axially and of pivoting on these spindles (33a), so as to allow this reversible movement of the sectors (32, 132) thus articulated.

8. Flat-running device according to Claim 6, **characterized in that** each articulation (33b'), of deformable type and consisting of said at least one flexible link articulated via said two loops on said spindles (33a), such as at least one textile cable and/or one metal cable, is capable of moving on these spindles (33a), so as to allow this reversible movement of the sectors (532) thus articulated.

9. Flat-running device (30, 130) according to one of the preceding claims, **characterized in that** the two ends of each sector (32 to 532) are recessed over a substantially middle portion of their axial width so as to form, in each sector end, a recess (32d to 532d) which extends over at least a portion of the length of the sector in the circumferential direction and which is delimited axially by two axial recess faces (32e, 132e) both traversed by said spindle (33a) attached to this sector end.

10. Flat-running device (30, 130) according to Claim 9, **characterized in that** each spindle (33a) axially traverses right through the sector (32 to 532) incorporating it, via an axial through-housing (32f, 132f) which is formed between each axial recess face (32e, 132e) and the lateral face (32c, 132c) facing this sector and which receives this spindle.

11. Flat-running device (30, 130) according to Claim 9 or 10, **characterized in that** said two recesses (32d to 532d) of the two respective connection ends of each sector (32 to 532) extend radially from the radially inner face of this sector, each recess having a substantially rectangular axial section.

12. Flat-running device (130) according to Claim 11, **characterized in that** said two recesses (132d, 232d, 532d) of each sector (132, 232, 532) extend to the radially outer face of this sector, thus traversing in the radial direction of the latter.

13. Flat-running device (30) according to Claim 11, **characterized in that** said two recesses (32d) of each sector (32, 432) terminate radially at a distance from the radially outer face of this sector, thus being blind in the radial direction of the latter, each sector optionally being surmounted by a rubber-based protective coating (32a, 432a).

14. Flat-running device (30, 130) according to one of the preceding claims, **characterized in that** each of said sectors (32, 132) is made of a plastic or composite material.

15. Tubeless mounted assembly (1) for a motor vehicle, comprising a wheel rim (10) in several parts (10a and 10b), a tire casing (20) comprising beads (21 and 22) respectively mounted against axially inner and outer edges (12 and 13) of the rim, and a flat-running device (30, 130) mounted around the rim between said edges, **characterized in that** this device is as defined in one of the preceding claims.

16. Mounted assembly (1) according to Claim 15, **characterized in that** said rim (10) is of the two-part bolted type and has a substantially flat rim bottom.
